# EUROPEAN PATENT APPLICATION

(11) **EP 2 551 338 A1**
(43) Date of publication of application: **30.01.2013**
(21) Application number: 11175618.5
(22) Date of filing: 27.07.2011
(51) Int. Cl.: C11D 3/37, C08F 220/02

(54) **Laundry detergent compositions with stain removal properties**

(71) Applicant: Henkel AG & Co. KGaA, 40589 Düsseldorf (DE)
(72) Inventor: Luneau, Benoit, 40225 Düsseldorf (DE); Vockenroth, Inga Kerstin, 40597 Düsseldorf (DE); Wikker, Eva-Maria, 40597 Düsseldorf (DE); Pegelow, Ulrich, 40597 Düsseldorf (DE); Masselon, Chloé, 33000 Bordeaux (FR); Drean, Hélène, 94220 Charenton le Pont (FR); van Gramberen, Eric, 95870 Bezons (FR); Wilson, James, 60580 Coye La Forêt (FR)

(57) **Abstract**

The present invention provides laundry detergent compositions comprising a statistical copolymer P obtainable by polymerization of 50 mol % to 99 mol % of hydrophilic monomer Mₕ, selected from the group consisting of acrylic acid and salts thereof, styrene sulfonate, N,N-diallyl-N,N-dimethylammonium chloride, beta-carboxyethyl acrylate, and mixtures thereof, 1 mol % to 50 mol % of lipophilic monomer Mₗ selected from the group consisting of acrylic acid alkyl esters, and up to 20 mol % of crosslinker C, said copolymer P having a mean molar mass of from 1000 g/mol to 100000 g/mol.

## Description

The present disclosure relates to laundry detergent compositions comprising copolymers.

Consumers desire laundry detergents including, but not limited to those in liquid and gel forms, that provide excellent overall cleaning. Detergent manufacturers typically utilize surfactants, among other things, to deliver this benefit. Due to increasing environmental sensitivity, as well as rising cost, the copious use of surfactants is losing favor. Consequently, there is a need to reduce the dosage of surfactant in the wash liquor, while still providing the consumer with excellent overall cleaning. One approach for reducing surfactant dosage is to formulate laundry detergents with substances, whose presence enhances the washing power of surfactants, without themselves generally having to exhibit a pronounced surfactant behavior. In this respect, polymers may be useful as agents releasing soil from fabric. In addition, or in the alternative, some polymers may provide for suspension of soils dispersed in the wash liquor, which in turn prevents their redeposition back onto the fabrics being washed.

It would therefore be desirable to provide laundry detergent compositions wherein polymers are substitutes for surfactants and provide for removal of soils, such as greasy soils and the like.

The present invention aims at solving this problem of increasing the detergency.

The subject matter of the invention is a laundry detergent composition which comprises a statistical copolymer P obtainable by polymerization of 50 mol % to 99 mol % of hydrophilic monomer Mₕ selected from the group consisting of acrylic acid and salts thereof, styrene sulfonate, N,N-diallyl-N,N-dimethylammonium chloride (DADMAC), beta-carboxyethyl acrylate (BCEA) and mixtures thereof, 1 mol % to 50 mol % of lipophilic monomer M_{I} selected from the group consisting of acrylic acid alkyl esters, and up to 20 mol % of crosslinker C, said copolymer P having a mean molar mass of from 1000 g/mol to 100000 g/mol, preferably 2000 g/mol to 80000 g/mol, and more preferably 5000 g/mol to 40000 g/mol.

"Mean molar mass" as used herein is the absolute weight average molar mass known to those skilled in the art. Absolute weight average molar mass (Mw) and number average molar mass (Mn) may be obtained by performing size exclusion chromatography coupled with a multiangle light scattering detector (Wyatt Technology miniDAWN® operating at 633 nm) and an RI detector (Agilent). The polydispersity index (PDI) is the ratio of Mw/Mn.

In the scope of the present invention, the copolymer P has been found to provide a significant cleaning capability. Said copolymer P notably enables greasy soil removal, eventually greasy pigment soil removal, and hydrophobic soil suspension.

Another subject matter of the invention is a process of laundering textiles, comprising a step of contacting the textile, preferably in an aqueous medium, with a composition comprising a statistical copolymer P obtainable by polymerization of 50 mol % to 99 mol % of hydrophilic monomer Mₕ selected from the group consisting of acrylic acid and salts thereof, styrene sulfonate, N,N-diallyl-N,N-dimethylammonium chloride (DADMAC), and beta-carboxyethyl acrylate (BCEA) and mixtures thereof, 1 mol % to 50 mol % of lipophilic monomer M_{I} selected from the group consisting of acrylic acid alkyl esters, and up to 20 mol % of crosslinker C, said copolymer P having a mean molar mass of from 1000 g/mol to 100000 g/mol. This process can be carried out manually or, preferably, with the help of a conventional domestic washing machine. It is possible to use a laundry detergent and the copolymer P at the same time or consecutively. Concurrent use can be advantageously achieved in particular by using a laundry detergent composition according to the invention, which comprises said copolymer P.

The copolymer P augments the primary washing power of laundry detergents, especially towards oil- and/or fat-containing soils, when washing textiles, especially fabrics made from or comprising poyester. Said copolymers P produce a significantly better removal, in particular of fatty and cosmetic stains on textiles, also on polyester or polyester-containing fabrics, than in the case when using compounds previously known for this purpose. Alternatively, for a constant degree of detergency, significant amounts of surfactants can be economized.

In the context of a washing process, the inventive use can be achieved by adding said copolymer P, preferably in amounts such that concentrations of copolymer P are in the range of 0.005 g/I to 0.2 g/I, to a detergent-containing wash liquor or, preferably, by incorporating it into the wash liquor as a constituent of the laundry detergent. In the context of a post treatment process for laundry, the inventive use can be achieved by separately adding said copolymer P to the rinsing liquor that is employed after the completion of the wash cycle, or by incorporating it as a constituent of the laundry post treatment agent, in particular a softening rinse. In this aspect of the invention, said laundry detergent may also comprise the copolymer P; however said laundry detergent can also be free of said copolymer P.

Laundry detergents that comprise said copolymer P may comprise all other conventional ingredients of such compositions which do not undergo undesirable interactions with the copolymer that is essential for the invention. Said copolymer P is preferably incorporated into a laundry detergent composition in amounts, by weight of said laundry detergent composition, of from 0.1 wt.% to 10 wt.%, preferably 0.2 wt.% to 5 wt.%, more preferably 0.5 wt.% to 2 wt.%.

An additional advantage is that the laundry detergent compositions according to the invention provide for detergency even when formulated with low levels of surfactants and even at room temperature conditions of laundering. It is also possible to provide such laundry detergent compositions with a polymer system that provides for both soil suspension and soil removal. Moreover, it is easy to provide these laundry detergent compositions in various forms such as liquids, gels, powders, tablets and, if desired, combinations thereof.

In a preferred embodiment of the invention, the laundry detergent composition further comprises, by weight of said laundry detergent composition, from 0.1 wt.% to 40 wt.%, preferably from 1 wt.% to about 40 wt.%, more preferably 10 wt.% to 20 wt.%, of a surfactant. It is to be understood that said surfactant is distinct from the copolymer P. "Surfactant" may refer to one particular surface active agent or to a mixture of two or more surface active agents.

The laundry detergent composition may possess any form, for example it may be a pourable liquid, gel, powder or tablet; preferably it is in the form of a pourable liquid or a gel.

"Pourable liquid" as used herein refers to a liquid having a viscosity such that a consumer may pour it out of a common container for liquid detergents at ambient temperature without effort. To achieve this, viscosities of no more than about 2000 mPa.s at 25°C at a shear rate of 20 s⁻¹ normally are sufficient.

In some embodiments of the invention, the viscosity of a pourable liquid detergent composition may be in the range of from about 200 to about 1000 mPa.s, preferably from about 200 to about 500 mPa.s, at 25°C at a shear rate of 20 s⁻¹.

"Gel" as used herein refers to a liquid, preferably a transparent or translucent liquid, having a viscosity of greater than about 2000 mPa.s at 25°C and at a shear rate of 20 s⁻¹.

In some embodiments of the invention, the viscosity of a gel detergent composition may be in the range of from about 3000 to about 10000 mPa.s at 25°C at a shear rate of 20 s⁻¹ and greater than about 5000 mPa.s at 25°C at a shear rate of 0.1 s⁻¹.

"Tablet" as used herein refers to solid shaped articles which may be monophasic or multiphasic, single-colored or multicolored and in particular consist of one layer or of two or more, in particular two, layers, by mixing together the components, optionally for each layer consecutively, in a mixer and compression molding the mixture by means of conventional tablet presses, for example eccentric presses or rotary presses, with pressing forces in the range from approx. 50 to 100 kN, preferably 60 to 70 kN. In particular in the case of multilayer tablets, it may be advantageous for at

least one layer to be preliminarily compression molded. This is preferably carried out at pressing forces of between 5 and 20 kN, in particular of 10 to 15 kN. In this manner, breaking-resistant tablets are straightforwardly obtained which nevertheless dissolve sufficiently rapidly under conditions of use and exhibit breaking and flexural strength values usually of 100 to 200 N, but preferably of above 150 N. A tablet produced in this manner is preferably of a weight of 10 g to 50 g, in particular of 15 g to 40 g. The tablets may be of any desired three-dimensional shape and may be round, oval or polygonal, intermediate shapes also being possible. Corners and edges are advantageously rounded. Round tablets preferably have a diameter of 30 mm to 40 mm. In particular the size of polygonal or cuboidal tablets, which are predominantly introduced by means of a dispenser, is dependent on the geometry and volume of this dispenser. Preferred embodiments have, for example, a base area of (20 to 30 mm)x(34 to 40 mm), in particular of 26x36 mm or of 24x38 mm.

All percentages, ratios and proportions used herein are by weight percent of the composition, unless otherwise specified. All average values are calculated "by weight" of the composition or components thereof, unless otherwise expressly indicated.

Mole percent (mol %) as used herein may mean either the percent of a monomeric unit in relation to all monomeric units of the polymer; or the mole fraction of reagents or reactants based upon other reagents or reactants.

The statistical copolymers P are based on hydrophilic monomers Mₕ and lipophilic monomers M_{I}. The amount of hydrophilic monomer Mₕ in the copolymer P is preferably in the range of from 50 mol % to 80 mol %, more preferably from 60 mol % to 75 mol %. The amount of lipophilic monomer M_{I} in the copolymer P is preferably in the range of from 20 mol % to 45 mol %, more preferably from 25 mol % to 40 mol %.

Hydrophilic monomers Mₕ are selected from the group consisting of acrylic acid (AA) and salts thereof, styrene sulfonate (NaSS), N,N-diallyl-N,N-dimethylammonium chloride (DADMAC), beta-carboxyethyl acrylate (BCEA, for example Sipomer B-CEA, Rhodia), and mixtures thereof. Typical salts are for example, lithium, sodium, potassium, and ammonium salts. Copolymers P are preferably formed by polymerization of at least 45 mol % of acrylic acid (AA) or acrylic acid salts or combinations thereof.

Lipophilic monomers M_{I} are selected from the group consisting of acrylic acid alkyl esters, such as n-butyl acrylate, isopropyl acrylate, tert-butyl acrylate, ethylhexyl acrylate, and mixtures thereof. Copolymers P are preferably formed by polymerization of from 5 to 50 % mol of n-butyl acrylate, especially when they also comprise acrylic acid.

A crosslinking monomer C, which optionally may be present, should comprise at least two polymerizable groups and preferably is multiethylenically, more preferably diethylenically, unsaturated. A suitable difunctional crosslinker is for example ethylene glycol dimethacrylate (EGDMA). Preferably, the amount of crosslinker C in the copolymer P is in the range of from 0.01 mol % to 15 mol %, more preferably less than 10 mol %. In a preferred embodiment of the invention, the proportion of crosslinker C in said copolymer P is null or is present in amount of up to 5 mol %.

For example, the copolymer P is a statistical copolymer of acrylic acid and butyl acrylate of composition 70/30 mol % and mean molar mass ranging from 5000 g/mol to 15000 g/mol.

For example, the copolymer P is a statistical copolymer of acrylic acid and butyl acrylate of composition 60/40 mol % and mean molar mass ranging from 5000 g/mol to 25000 g/mol.

In another example, the copolymer P is a statistical copolymer of acrylic acid and butyl acrylate of composition 50/50 mol % and mean molar mass ranging from 1000 g/mol to 100000 g/mol, preferably from 5000 g/mol to 50000 g/mol.

In another example, the copolymer P is a statistical copolymer of acrylic acid, butyl acrylate and diethyleneglycol diacrylate of composition 61/26/13 mol % and mean molar mass ranging from 5000 g/mol to 35000 g/mol, preferably from 10000 g/mol to 35000 g/mol.

In another example, the copolymer P is a statistical copolymer of acrylic acid, sodium styrene sulphonate and butyl acrylate of composition 60/10/30 mol % and mean molar mass ranging from 5000 g/mol to 25000 g/mol, preferably from 10000 g/mol to 20000 g/mol.

In another example, the copolymer P is a statistical copolymer of acrylic acid, diallyldimethylammonium chloride and butyl acrylate of composition 68/2/30 mol % and mean molar mass ranging from 5000 g/mol to 25000 g/mol, preferably from 10000 g/mol to 20000 g/mol.

In another example, the copolymer P is a statistical copolymer of acrylic acid, beta-carboxyethyl acrylate and butyl acrylate of composition 45/25/30 mol % and mean molar mass ranging from 5000 g/mol to 25000 g/mol, preferably from 10000 g/mol to 20000 g/mol.

For example, the copolymer P is a statistical copolymer of acrylic acid and butyl acrylate of composition 70/30 mol % and mean molar mass ranging from 5000 g/mol to 15000 g/mol.

For example, the copolymer P is a statistical copolymer of acrylic acid and butyl acrylate of composition 60/40 mol % and mean molar mass ranging from 5000 g/mol to 25000 g/mol.

In another example, the copolymer P is a statistical copolymer of acrylic acid and butyl acrylate of composition 50/50 mol % and mean molar mass ranging from 1000 g/mol to 100000 g/mol, preferably from 5000 g/mol to 50000 g/mol.

In another example, the copolymer P is a statistical copolymer of acrylic acid, butyl acrylate and diethyleneglycol diacrylate of composition 61/26/13 mol % and mean molar mass ranging from 5000 g/mol to 35000 g/mol, preferably from 10000 g/mol to 35000 g/mol.

In another example, the copolymer P is a statistical copolymer of acrylic acid, sodium styrene sulphonate and butyl acrylate of composition 60/10/30 mol % and mean molar mass ranging from 5000 g/mol to 25000, preferably from 10000 g/mol to 20000 g/mol.

In another example, the copolymer P is a statistical copolymer of acrylic acid, diallyldimethylammonium chloride and butyl acrylate of composition 68/2/30 mol % and mean molar mass ranging from 5000 g/mol to 25000 g/mol, preferably from 10000 g/mol to 20000 g/mol.

In another example, the copolymer P is a statistical copolymer of acrylic acid, beta-carboxyethyl acrylate and butyl acrylate of composition 45/25/30 mol % and mean molar mass ranging from 5000 g/mol to 25000 g/mol, preferably from 10000 g/mol to 20000 g/mol.

A preferred method of preparing copolymers P is a controlled free-radical polymerization process, including a step of bringing into contact a mixture of the hydrophilic monomers Mₕ and lipophilic monomers M_{I} as defined above, for example in a solvent, with at least one source of free radicals, and at least one control agent compound which is preferably a xanthate, dithioester, thioether-thione or dithiocarbamate, more preferably a xanthate.

According to this method, the source of free radicals is generally a radical polymerization initiator, selected from the initiators conventionally used in radical polymerization, e.g. hydrogen peroxides, azo compounds or redox systems, as described for example in US 2003045661. More preferably, said copolymers P may be prepared according to specific processes disclosed in US 2003/0045661, WO 96/30421, WO 98/01478, WO 99/35178, WO 98/58974, WO 00/75207, WO 01/42312, WO 99/35177, WO 99/31144, FR 2794464 or WO 02/26836.

A detergent composition according to the invention may comprise a bleaching agent based on peroxide, particularly in amounts in the range 5 wt.% to 70 wt.%, as well as optional bleach activators, particularly in amounts in the range of from 0.5 wt.% to 10 wt.%. These optionally present bleaching agents are preferably peroxy compounds generally used in laundry detergents such as percarboxylic acids, for example diperoxy dodecane dioic acid or phthaloylaminoperoxycaproic acid, hydrogen peroxide, alkali metal perborate that can be present as the tetra- or monohydrate, percarbonate, perpyrophosphate and persilicate, which are generally present as the alkali metal salts, particularly as the sodium salts. Such bleaching agents are present in laundry detergents in accordance with the invention, preferably in amounts up to 25 wt.%, particularly up to 15 wt.% and particularly preferably from 5 wt.% to 15 wt.%, each based on the total composition, wherein percarbonate in particular is incorporated. The optionally present components of the bleach activators include the customarily used N- or O-acyl compounds, for example polyacylated alkylenediamines, particularly tetraacetylethylenediamine, acylated glycolurils, in particular tetraacetyl glycoluril, N-acylated hydantoins, hydrazides, triazoles, urazoles, diketopiperazines, sulfuryl amides and cyanurates, also carboxylic acid anhydrides, particularly phthalic anhydride, carboxylic acid esters, particularly sodium isononanoyl phenol sulfonate, and acylated sugar derivatives, in particular pentaacetylglucose, as well as cationic nitrile derivatives such as trimethylammonium acetonitrile salts. In order to avoid interaction with the peroxy compounds during storage, the bleach activators can be coated or granulated in a known manner with coating materials, wherein tetraacetylethylenediamine granulated with the help of carboxymethyl cellulose with mean particle sizes of 0.01 mm to 0.8mm, granulated 1,5-diacetyl-2,4-dioxohexahydro-1,3,5-triazine, and/or trialkylammonium acetonitrile produced in particle form is particularly preferred. The laundry detergents preferably comprise these types of bleach activators in amounts of up to 8 wt.%, particularly 0,5 wt.% to 6 wt.%, each based on the total composition.

In a preferred embodiment, a detergent composition comprises non-ionic surfactant, selected from fatty alkyl polyglycosides, fatty alkyl polyalkoxylates, especially ethoxylates and/or propoxylates, fatty acid polyhydroxyamides and/or ethoxylated and/or propoxylated products of fatty alkylamines, vicinal diols, fatty acid alkyl esters and/or fatty acid amides as well as their mixtures, especially in an amount in the range 2 wt.% to 25 wt.%.

A further embodiment of this type of composition includes the presence of anionic surfactant, preferably of the sulfate and/or sulfonate type, especially fatty alkyl sulfate, fatty alkyl ether sulfate, sulfofatty acid ester and/or di-salts of sulfofatty acid, especially in an amount in the range 2 wt.% to 25 wt.% The anionic surfactant is preferably selected from the alkyl or alkenyl sulfates and/or the alkyl or alkenyl ether sulfates, in which the alkyl or alkenyl group has 8 to 22, particularly 12 to 18 carbon atoms. These are not usually single substances, but are rather fractions or mixtures. Among these are preferred those whose content of compounds having longer chain groups in the range 16 to 18 carbon atoms is more than 20 wt.%.

As further optional anionic surfactant ingredients one can consider soaps, wherein saturated fatty acid soaps are suitable, such as the salts of lauric acid, myristic acid, palmitic acid or stearic acid, as well as soaps derived from natural fatty acid mixtures such as coconut oil fatty acid, palm kernel oil fatty acid or tallow fatty acid. Those soap mixtures are particularly preferred that are composed of 50 wt.% to 100 wt.% of saturated C₁₂-C₁₈ fatty acid soaps and up to 50 wt.% of oleic acid soap. Preferably, soap is comprised in amounts of 0.1 wt.% to 5 wt.%.

The possible non-ionic surfactants include the alkoxylates, especially the ethoxylates and/or propoxylates of saturated or mono to polyunsaturated linear or branched alcohols containing 10 to 22 carbon atoms, preferably 12 to 18 carbon atoms. Generally, the degree of alkoxylation of the alcohol is between 1 and 20, preferably between 3 and 10. They can be manufactured in a known manner by treating the relevant alcohol with the relevant alkylene oxides. The derivatives of the fatty alcohols are particularly suitable, although their branched isomers, particularly the so-called oxo alcohols, can also be employed for manufacturing useable alkoxylates. Accordingly, the alkoxylates, especially the ethoxylates, of primary alcohols containing linear, especially dodecyl, tetradecyl, hexadecyl or octadecyl groups as well as their mixtures can be used. Moreover, corresponding alkoxylation products of alkylamines, vicinal diols and carboxylic acid amides, which in regard to the alkyl moiety correspond to the cited alcohols, can be used. Furthermore, the ethylene oxide and/or propylene oxide insertion products of alkyl esters of fatty acids as well as polyhydroxyamides of fatty acids can be considered. Suitable alkyl polyglycosides for incorporation into the inventive compositions are compounds of the general formula (G)ₙ-OR¹², in which R¹² means an alkyl or alkylene group with 8 to 22 carbon atoms, G a glycose unit and n means a number between 1 and 10. The glycoside components (G)ₙ concern oligomers or polymers of naturally occurring aldose or ketose monomers, which particularly include glucose, mannose, fructose, galactose, talose, gulose, altrose, allose, idose, ribose, arabinose, xylose and lyxose. The oligomers consisting of this type of glycosidically linked monomers are characterized not only by the type of sugar comprised in them but also by their number, the "degree of oligomerization". The degree of oligomerization n generally assumes fractional numbers for the analytically determined value; it is between 1 and 10 and for the preferably employed glycosides is below a value of 1.5, particularly between 1.2 and 1.4. Glucose, due to favorable availability, is the preferred monomer building block. The alkyl or alkenyl moiety R¹² of the glycosides is also preferably derived from easily available derivatives of renewable raw materials, especially from fatty alcohols, although their branched isomers, particularly the so-called oxo alcohols, can also be employed for manufacturing suitable glycosides. Accordingly, especially the primary alcohols with linear, octyl, decyl, dodecyl, tetradecyl, hexadecyl or octadecyl groups as well as their mixtures can be used. Particularly preferred alkyl glycosides comprise a coco fat alkyl ester group, i.e. mixtures essentially having R¹² = dodecyl and R¹² = tetradecyl.

Laundry detergent compositions may comprise non-ionic surfactant, preferably in amounts of 1 wt.% to 30 wt.%, particularly 1 wt.% to 25 wt.%, wherein quantities in the upper part of this range are more likely to be encountered in liquid laundry detergents, and granular laundry detergents preferably comprise rather lower quantities of up to 5 wt.%.

The compositions can, instead or in addition, comprise further surfactants, preferably synthetic anionic surfactants of the sulfate or sulfonate type, such as for example alkylbenzene sulfonates, in amounts of preferably not more than 20 wt.%, particularly 0.1 wt.% to 18 wt.%, each based on the total composition. As particularly suitable synthetic anionic surfactants for use in these types of compositions may be cited the alkyl and/or alkenyl sulfates containing 8 to 22 carbon atoms which carry an alkali metal, ammonium or alkyl or hydroxyalkyl substituted ammonium ion as the counter ion. The derivatives of fatty alcohols containing especially 12 to 18 carbon atoms and their branched analogs, the so-called oxo alcohols, are preferred. The alkyl and alkenyl sulfates can be manufactured in a known manner by treating the corresponding alcohol components with a conventional sulfating reagent, particularly sulfur trioxide or chlorosulfonic acid, followed by neutralization with alkali metal-, ammonium- or alkyl- or hydroxyalkyl-substituted ammonium bases. The suitable surfactants of the sulfate type also include the sulfated alkoxylation products of the cited alcohols, the so-called ether sulfates. Preferably, such ether sulfates comprise 2 to 30, particularly 4 to 10 ethylene glycol groups per molecule. The suitable anionic surfactants of the sulfonate type include the α-sulfoesters obtained by treating fatty acid esters with sulfur trioxide and subsequent neutralization, especially the sulfonation products derived from fatty acids containing 8 to 22 carbon atoms, preferably 12 to 18 carbon atoms, and linear alcohols containing 1 to 6 carbon atoms, preferably 1 to 4 carbon atoms, as well as those obtained by formal saponification of the above mentioned sulfofatty acids.

The compositions can also, when desired, comprise betaines and/or cationic surfactants, which - when present - are preferably added in amounts of 0.5 wt.% to 7 wt.%. Among these, esterquats are particularly preferred.

In a further embodiment, the composition comprises water-soluble and/or water-insoluble builders, particularly selected from alkali metal aluminosilicate, crystalline alkali metal silicate with a modulus greater than 1, monomeric polycarboxylate, polymeric polycarboxylate and their mixtures, especially in amounts in the range of 2.5 wt.% to 60 wt.%.

The composition preferably comprises up to 55 wt.% of water-soluble and/or water-insoluble, organic and/or inorganic builder. The water-soluble organic builders particularly include those from the class of the polycarboxylic acids, particularly citric acid and sugar acids, as well as the polymeric (poly)carboxylic acids, particularly the polycarboxylates that can be obtained by oxidation of polysaccharides, polymeric acrylic acid, methacrylic acid, maleic acid and mixed polymers thereof, which can also comprise minor amounts of copolymerized polymerizable substances that are free of carboxylic acid functionality. The relative molecular weight of the homopolymers of unsaturated carboxylic acids lies generally between 5000 g/mol and 200000 g/mol, that of the copolymers between 2000 g/mol and 200000 g/mol, preferably 50000 g/mol to 120000 g/mol, based on the free acid. A particularly preferred acrylic acid-maleic acid copolymer has a relative molecular weight of 50000 g/mol to 100000 g/mol. Suitable, yet less preferred compounds of this class, are copolymers of acrylic acid or methacrylic acid with vinyl ethers, such as vinyl methyl ethers, vinyl esters, ethylene, propylene and styrene, in which the content of the acid is at least 50 wt.%. Terpolymers, which comprise two unsaturated acids and/or their salts as monomers as well as vinyl alcohol and/or an esterified vinyl alcohol or a carbohydrate as the third monomer, can also be used as water-soluble organic builders. The first acid monomer or its salt is derived from a monoethylenically unsaturated C₃-C₈ carboxylic acid and preferably from a C₃-C₄ monocarboxylic acid, particularly from (meth)acrylic acid. The second acid monomer or its salt can be a derivative of a C₄-C₈ dicarboxylic acid, maleic acid being particularly preferred. In this case the third monomer unit is formed from vinyl alcohol and/or preferably an esterified vinyl alcohol. In particular, vinyl alcohol derivatives are preferred which represent an ester of short chain carboxylic acids, for example C₁-C₄ carboxylic acids with vinyl alcohol. Preferred terpolymers comprise 60 wt.% to 95 wt.%, particularly 70 wt.% to 90 wt.% (meth)acrylic acid or (meth)acrylate, particularly preferably acrylic acid or acrylate, and maleic acid or maleate as well as 5 wt.% to 40 wt.%, preferably 10 wt.% to 30 wt.% vinyl alcohol and/or vinyl acetate. Terpolymers are quite particularly preferred, in which the weight ratio (meth)acrylic acid or (meth)acrylate to maleic acid or maleate is between 1: 1 and 4: 1, preferably between 2: 1 and 3: 1 and particularly 2: 1 and 2.5: 1. Here, both the quantities and the weight ratios are based on the acids. The second acid monomer or its salt can also be a derivative of an allyl sulfonic acid, which is substituted in the 2-position with an alkyl group, preferably a C₁-C₄ alkyl group, or an aromatic group that is preferably derived from benzene or benzene derivatives. Preferred terpolymers comprise 40 wt.% to 60 wt.%, particularly 45 wt.% to 55 wt.% (meth)acrylic acid or (meth)acrylate, particularly preferably acrylic acid or acrylate, 10 wt.% to 30 wt.%, preferably 15 wt.% to 25 wt.% methallyl sulfonic acid or methallyl sulfonate and as the third monomer 15 wt.% to 40 wt.%, preferably 20 wt.% to 40 wt.% of a carbohydrate. This carbohydrate can, for example, be a mono, di, oligo or polysaccharide, mono, di or oligosaccharides being preferred, saccharose being particularly preferred. Adding the third monomer presumably creates intended weak points in the polymer, which are responsible for the good biological degradation of the polymer. In general, the terpolymers possess a relative molecular weight between 1000 g/mol and 200000 g/mol, preferably between 2000 g/mol and 50000 g/mol and particularly between 3000 g/mol and 10000 g/mol. They can be added, especially for the manufacture of liquid compositions, in the form of aqueous solutions, preferably in the form of 30 to 50 weight percent aqueous solutions. In general, all the cited polycarboxylic acids are added in the form of their water-soluble salts, particularly their alkali metal salts.

Such organic builders are preferably comprised in amounts of up to 40 wt.%, particularly up to 25 wt.% and particularly preferably from 1 wt.% to 5 wt.%. Amounts in the latter range are preferably incorporated in pasty or liquid, especially aqueous compositions.

In particular, crystalline or amorphous alkali metal aluminosilicates in amounts of up to 50 wt.%, preferably not more than 40 wt.% and in liquid agents not more than 1 wt.% to 5 wt.% are added as the water-insoluble, water-dispersible inorganic builders.

Among these, the detergent-quality crystalline sodium aluminosilicates, particularly zeolite NaA and optionally NaX, are preferred. Amounts close to the cited upper limit are preferably incorporated in solid, particulate compositions. Suitable aluminosilicates exhibit in particular no particles with a particle size above 30 µm and preferably consist of at least 80 wt.% of particles smaller than 10 µm. Their calcium binding capacity, which can be determined according to the indications of German patent DE 24 12 837, lies in the range 100 to 200 mg CaO per gram. Suitable substitutes or partial substitutes for the cited aluminosilicate are crystalline alkali metal silicates that can be alone or present in a mixture with amorphous silicates. The alkali metal silicates that can be used as builders in the inventive agents preferably have a molar ratio of alkali metal oxide to SiO₂ below 0.95, particularly 1: 1.1 to 1: 12 and can be amorphous or crystalline. Preferred alkali metal silicates are the sodium silicates, particularly the amorphous sodium silicates, with a molar ratio Na₂O: SiO₂ of 1: 2 to 1: 2.8. These types of amorphous alkali metal silicates are commercially available for example under the name Portil®. Those with a molar ratio Na₂O: SiO₂ of 1:1.9 to 1: 2.8 are preferably added as solids and not in the form of a solution in the context of manufacturing. Crystalline silicates that can be present alone or in a mixture with amorphous silicates are preferably crystalline, layered silicates corresponding to the general formula Na₂SiₓO₂ₓ₊₁ yH₂O, wherein x, the so-called modulus, is a number from 1.9 to 4 and y is a number from 0 to 20, preferred values for x being 2, 3 or 4. Preferred crystalline layered silicates are those in which x assumes the values 2 or 3 in the cited general formula. In particular, both β- and δ-sodium disilicates (Na₂Si₂O₅ yH₂O) are preferred. Practically anhydrous crystalline alkali metal silicates of the abovementioned general formula, in which x is a number from 1.9 to 2.1 can also be manufactured from amorphous alkali metal silicates, and can be used in compositions that comprise active substances to be used according to the invention. In a further preferred embodiment of the composition according to the invention, a crystalline sodium layered silicate with a modulus of 2 to 3 is added, as can be manufactured from sand and soda. In another preferred embodiment of laundry detergents that comprise an inventively used active substance, crystalline sodium silicates with a modulus in the range 1.9 to 3.5 are added. Their content of alkali metal silicates is preferably in the range 1 wt.% to 50 wt.% and particularly 5 wt.% to 35 wt.%, based on the anhydrous active substance. For the case that alkali metal aluminosilicate, particularly zeolite, is also present as an additional builder, then the content of alkali metal silicate is preferably in the range 1 wt.% to 15 wt.% and particularly 2 wt.% to 8 wt.%, based on the anhydrous active substance. The weight ratio of aluminosilicate to silicate, each based on anhydrous active substances, is then preferably 4: 1 to 10: 1. In agents that comprise both amorphous and crystalline alkali metal silicates, the weight ratio of amorphous alkali metal silicate to crystalline alkali metal silicate is preferably 1: 2 to 2: 1 and particularly 1: 1 to 2: 1.

In addition to the cited inorganic builders, further water-soluble or water-insoluble inorganic substances can be incorporated into the compositions that comprise an active substance to be used with them in accordance with the invention or in inventive processes. In this context, the alkali metal carbonates, alkali metal hydrogen carbonates and alkali metal sulfates as well as their mixtures are suitable. This type of additional inorganic material can be present in amounts of up to 70 wt.%.

In addition, the compositions can comprise further conventional ingredients of laundry detergents and cleaning agents. These optional ingredients particularly include enzymes, enzyme stabilizers, complexants for heavy metals, for example amino polycarboxylic acids, amino hydroxypolycarboxylic acids, polyphosphonic acids and/or amino polyphosphonic acids, foam inhibitors, for example organopolysiloxanes or paraffins, solvents, and optical brighteners, for example stilbene sulfonic acid derivatives. Preferably, the compositions that comprise an active substance used in accordance with the invention, comprise up to 1 wt.%, particularly 0.01 wt.% to 0.5 wt.% optical brightener, particularly compounds from the class of the substituted 4,4'-bis-(2,4,6-triamino-s-triazinyl)-stilbene-2,2'-disulfonic acids, up to 5 wt.%, particularly 0.1 wt.% to 2 wt.% complexants for heavy metals, particularly aminoalkylene phosphonic acids and their salts, and up to 2 wt.%, particularly 0.1 wt.% to 1 wt.% foam inhibitors, wherein the cited weight fractions are each based on the total composition.

Solvents that in particular can be added to liquid compositions are, besides water, preferably those that are miscible with water. They include the lower alcohols, for example ethanol, propanol, isopropanol, and the isomeric butanols, glycerine, lower glycols, for example ethylene and propylene glycol, and the ethers that can be derived from the cited classes of compounds. The active substances used in accordance with the invention are generally dissolved in such liquid combinations or are present in the form of a suspension.

Enzymes that are optionally present are preferably selected from the group that includes protease, amylase, lipase, cellulase, hemicellulases, oxidase, peroxidase or their mixtures. Protease isolated from microorganisms, such as bacteria and fungi, are considered first and foremost. They are obtained by means of fermentation processes from suitable microorganisms in a manner known *per se*. Proteases are commercially available, for example, under the trade names BLAP®, Savinase®, Esperase®, Maxatase®, Optimase®, Alcalase®, Durazym® or Maxapem®. The suitable lipase can be obtained for example from Humicola lanuginosa, from Bacillus types, from Pseudomonas types, from Fusarium types, from Rhizopus types or from Aspergillus types. Suitable lipases are commercially available, for example, under the trade names Lipolase®, Lipozym®, Lipomax®, Amano®-Lipase, Toyo-Jozo®-Lipase, Meito®-Lipase und Diosynth®-Lipase. Suitable amylase are commercially available, for example, under the trade names Maxamyl®, Termamyl®, Duramyl® and Purafect® OxAm. Suitable cellulase can be an isolated enzyme from bacteria or fungi and exhibits a pH optimum preferably in the weakly acidic to weakly alkaline region of 6 to 9.5. These types of cellulases are commercially available under the trade names Celluzyme®, Carezyme® and Ecostone®.

The conventional enzyme stabilizers that are optionally present, particularly in liquid compositions, include amino alcohols, for example mono-, di-, triethanolamine and mono-, di-, tripropanolamine and their mixtures, lower carboxylic acids, boric acid or alkali metal borates, boric acid carboxylic acid combinations, boric acid esters, boronic acid derivatives, calcium salts, for example the Ca formic acid combination, magnesium salts, and/or sulfur-containing reducing agents.

The suitable foam inhibitors include long chain soaps, especially behenic soap, fatty acid amides, paraffins, waxes, microcrystalline waxes, organopolysiloxanes and their mixtures, which can moreover comprise microfine, optionally silanized or otherwise hydrophobized silica. For use in particulate compositions, such foam inhibitors are preferably bound on granular, water-soluble carriers.

In a preferred embodiment, a detergent composition is in particulate form and comprises up to 25 wt.%, particularly 5 wt.% to 20 wt.% bleaching agent, especially alkali metal percarbonate, up to 15 5 wt.%, particularly 1 wt.% to 10 wt.% bleach activator, 20 wt.% to 55 wt.% inorganic builder, up to 10 0 wt.%, particularly 2 wt.% to 8 wt.% water-soluble organic builder, 10 wt.% to 25 wt.% synthetic anionic surfactant, 1 wt.% to 5 wt.% non-ionic surfactant and up to 25 wt.%, particularly 0.1 wt.% to 25 wt.% inorganic salts, especially alkali metal carbonate and/or alkali metal hydrogen carbonate.

In a further preferred embodiment, a detergent composition, is in pourable liquid form and comprises 3 wt.% to 20 wt.%, particularly 4 wt.% to 10 wt.% non-ionic surfactant, 2 wt.% to 25 wt.%, particularly 5 wt.% to 20 wt.% anionic surfactant, 0.5 wt.% to 5 wt.%, particularly 1 wt.% to 4 wt.% organic builder, especially polycarboxylate such as citrate, up to 1.5 wt.%, particularly 0.1 wt.% to 1 wt.% complexant for heavy metals, such as phosphonate, and in addition to optionally comprised enzyme, enzyme stabilizers, colorants and/or fragrance as well as water and/or water-miscible solvent.

It is also possible to use a combination of an inventively essential copolymer P with a soil-release polymer obtainable from dicarboxylic acid and an optionally polymeric diol in order to enhance the cleaning power of laundry detergents when washing fabrics. In the context of the inventive composition and the inventive process, such combinations are also possible.

The well known polyester soil-release polymers that can be additionally incorporated or used include copolyesters of dicarboxylic acids, for example adipic acid, phthalic acid or terephthalic acid, diols, for example ethylene glycol or propylene glycol, and polydiols, for example polyethylene glycol or polypropylene glycol. The soil-release polymer is preferably water-soluble, wherein the term "water-soluble" should be understood to mean a solubility of at least 0.01 g, preferably at least 0.1 g of the polymer per liter water at room temperature and pH 8. Under these conditions however, particularly prefered polymers exhibit a solubility of at least 1 g per liter, more preferably at least 10 g per liter.

### Examples

### Example 1: Synthesis of copolymers P

| Polymer number | Molar composition (mol %) | | |
|---|---|---|---|
| | Acrylic acid | Butyl acrylate | Other |
| P I | 50 | 50 | 0 |
| P II | 70 | 30 | 0 |
| P III | 61 | 26 | 13 |
| P IV | 60 | 30 | 10 |
| P V | 45 | 25 | 30 |
| P VI | 60 | 40 | 0 |
| P VII | 68 | 30 | 2 |

### Statistical copolymer PI: BuA/AA

Into a 3 necked 500ml round bottomed flask equipped with reflux condenser and mechanical agitator were added ethanol (93g), acrylic acid (0.81g), butyl acrylate (1.44g) and Rhodixan A1 (*O-*ethyl-*S*-(1-methoxycarbonyl)ethyl-dithiocarbonate) (0.68g). The reaction mixture was purged with N₂ for 30 minutes and heated to 78°C with agitation. Once the reaction temperature had been reached a solution of acrylic acid (19.23g) and butyl acrylate (34.2g) was added over 600 minutes. Simultaneously a solution of AMBN (0,78g) and ethanol (15g) was added over 720 minutes. Upon completion of the AMBN feed the reaction mixture was maintained at 78°C for a further 2 hours whereupon the mixture was cooled to room temperature. The reaction mixture was subjected to distillation under reduced pressure in order to remove ethanol. The dry residue was re-dissolved in de-ionized water to achieve a solids content of approximately 30%.

Residual monomers measured by HPLC were AA (1191 ppm), BuA (82 ppm). The solids content of the obtained polymer was 31.2%.

Mw of this polymer is between 5000 g/mol and 50000 g/mol.

### Statistical copolymer P II: BuA/AA

Into a jacketed 1l reactor equipped with reflux condenser and mechanical agitator were added ethanol (243g), acrylic acid (2,98g), butyl acrylate (2,27g) and Rhodixan A1 (*O*-ethyl-*S*-(1-methoxycarbonyl)ethyl-dithiocarbonate) (0,87g). The reaction mixture was purged with N₂ for 30 minutes and heated to 78°C with agitation. Once the reaction temperature had been reached a solution of acrylic acid (56,6g) and butyl acrylate (43,2g) was added over 600 minutes. Simultaneously a solution of AMBN (0,82g) and ethanol (14,5g) was added over 720 minutes. Apon completion of the AMBN feed the reaction mixture was maintained at 78°C for a further 2 hours whereupon the mixture was cooled to room temperature. The reaction mixture was subjected to distillation under reduced pressure in order to remove solvent. The residue was re-dissolved in de-ionized water to achieve a solids content of approximately 30%.

GPC MALS analysis yielded *M_{w}* = 10400 g/mol, *Mₙ* = 6700 g/mol, PDI 1.5. Residual monomers measured by HPLC were AA (3930 ppm), BuA (<20 ppm). The solids content of the obtained polymer after solvent exchange was 32%.

### Statistical copolymer P III: BuA/AA/Ethylene glycol dimethacrylate

Into a 3 necked 500ml round bottomed flask equipped with reflux condenser and mechanical agitator were added ethanol (132.6), acrylic acid (4g), butyl acrylate (3.05g), and Rhodixan A1 (*O-*ethyl-*S*-(1-methoxycarbonyl)ethyl-dithiocarbonate) (2.00g). The reaction mixture was purged with N₂ for 30 minutes and heated to 78°C with agitation. Once the reaction temperature had been reached a shot of AMBN was added (0,93g). Immediately thereafter a solution of acrylic acid (36g), butyl acrylate (27.44g), ethylene glycol dimethacrylate (23.58g) was added over 600 minutes. Simultaneously a solution of AMBN (1.85g) and ethanol (16g) was added over 720 minutes. Upon completion of the AMBN feed the reaction mixture was maintained at 78°C for a further 2 hours whereupon the mixture was cooled to room temperature. The reaction mixture was subjected to distillation under reduced pressure in order to remove ethanol. The dry residue was re-dissolved in de-ionized water to achieve a solids content of approximately 30%.

GPC MALS analysis yielded *M*_{w} = 32400 g/mol, *M*ₙ = 19000 g/mol, PDI 1.7. Residual monomers measured by HPLC were AA (440 ppm), and ethylene glycol dimethacrylate (<20 ppm). The solids content of the obtained polymer after solvent exchange was 21.01 %.

### Statistical copolymer P IV: BuA/AA

Into a 3 necked 500ml round bottomed flask equipped with reflux condenser and mechanical agitator were added ethanol (179g), acrylic acid (2g), butyl acrylate (2,37g) and Rhodixan A1 (*O-*ethyl-*S*-(1-methoxycarbonyl)ethyl-dithiocarbonate) (0,92g). The reaction mixture was purged with N₂ for 30 minutes and heated to 78°C with agitation. Once the reaction temperature had been reached a solution of acrylic acid (38g) and butyl acrylate (45,06g) was added over 600 minutes. Simultaneously a solution of AMBN (0,85g) and Ethanol (30g) was added over 720 minutes. Upon completion of the AMBN feed the reaction mixture was maintained at 78°C for a further 2 hours whereupon the mixture was cooled to room temperature. The reaction mixture was subjected to distillation under reduced pressure in order to remove ethanol. The dry residue was re-dissolved in de-ionized water to achieve a solids content of approximately 30%.

GPC MALS analysis yielded *M*_{w} = 9680 g/mol, *M*ₙ = 9000 g/mol, PDI 1.1. Residual monomers measured by HPLC were AA (1979 ppm), BuA (<20 ppm). The solids content of the obtained polymer after solvent exchange was 25.8%.

### Statistical copolymer P V: BuA/AA/BCEA

Into a 3 necked 500ml round bottomed flask equipped with reflux condenser and mechanical agitator were added ethanol (141.2g), acrylic acid (3.1g), butyl acrylate (3.68g), Sipomer B-CEA (Beta-Carboxyethyl Acrylate) (3.44g) and Rhodixan A1 (*O*-ethyl-*S*-(1-methoxycarbonyl)ethyl-dithiocarbonate) (1.08g). The reaction mixture was purged with N₂ for 30 minutes and heated to 78°C with agitation. Once the reaction temperature had been reached a shot of AMBN was added (0,50g). Immediately thereafter, a solution of acrylic acid (27.9g), butyl acrylate (33.08g), Sipomer B-CEA (Beta-Carboxyethyl Acrylate) (31 g) was added over 600 minutes. Simultaneously a solution of AMBN (0.99g) and ethanol (16g) was added over 720 minutes. Upon completion of the AMBN feed the reaction mixture was maintained at 78°C for a further 2 hours whereupon the mixture was cooled to room temperature. The reaction mixture was subjected to distillation under reduced pressure in order to remove ethanol. The dry residue was re-dissolved in de-ionized water to achieve a solids content of approximately 30%.

GPC MALS analysis yielded *M*_{w} = 15300 g/mol, *M*ₙ = 7900 g/mol, PDI 1.9. Residual monomers measured by HPLC were AA (2590 ppm), BuA (<20 ppm) and Sipomer -CEA (4100 ppm). The solids content of the obtained polymer after solvent exchange was 33.80%.

### Statistical copolymer P VI: BuA/AA/NaSS

Into a 3 necked 500ml round bottomed flask equipped with reflux condenser, and mechanical agitator were added ethanol (27,04g), de-ionized water (6.52g), acrylic acid (3g), butyl acrylate (2,67g), sodium styrene sulphonate (1.43g) and Rhodixan A1 (*O*-ethyl-*S*-(1-methoxycarbonyl)ethyl-dithiocarbonate) (0,747g). The reaction mixture was purged with N₂ for 30 minutes and heated to 78°C with agitation. Once the reaction temperature had been reached a shot of AMBN was added (0,34g). Immediately thereafter a solution of acrylic acid (27g), butyl acrylate (24.01g), sodium styrene sulphonate (12.88g), de-ionized water (58.66g) and ethanol (78.74g) was added over 600 minutes. Simultaneously a solution of AMBN (1.03g) and ethanol (16g) was added over 720 minutes. Upon completion of the AMBN feed, the reaction mixture was maintained at 78°C for a further 2 hours whereupon the mixture was cooled to room temperature. The reaction mixture was subjected to distillation under reduced pressure in order to remove solvent. The dry residue was re-dissolved in de-ionized water to achieve a solids content of approximately 30%.

GPC MALS analysis yielded *M*_{w} = 18000 g/mol, *M*ₙ = 13300 g/mol, PDI 1.4. Residual monomers measured by HPLC were AA (680 ppm), BuA (<20 ppm) and Sodium styrene sulphonate (<20 ppm). The solids content of the obtained polymer after solvent exchange was 28%.

### Statistical copolymer P VII: BuA/AA/DADMAC

Into a 3 necked 500ml round bottomed flask equipped with reflux condenser, and mechanical agitator were added, Ethanol (29.8), de-ionized water (7.45), acrylic acid (3.6g) butyl acrylate (2,82g), DADMAC (0.37g) and Rhodixan A1 (*O*-ethyl-*S*-(1-methoxycarbonyl)ethyl-dithiocarbonate) (0.7g). The reaction mixture was purged with N₂ for 30 minutes and heated to 78°C with agitation. Once the reaction temperature had been reached a shot of AMBN was added (0,32g). Immediately thereafter, a solution of acrylic acid (32.4g), butyl acrylate (25.42g), DADMAC (3.29g), de-ionized water (14.98g) and ethanol (91.39g) was added over 600 minutes. Simultaneously a solution of AMBN (0.97) and ethanol (16g) was added over 720 mins. Upon completion of the AMBN feed the reaction mixture was maintained at 78°C for a further 2 hours whereupon the mixture was cooled to room temperature. The reaction mixture was subjected to distillation under reduced pressure in order to remove solvent. The dry residue was re-dissolved in de-ionized water to achieve a solids content of approximately 30%.

GPC MALS analysis yielded *M*_{w} = 13500 g/mol, *M*ₙ = 8300 g/mol, PDI 1.6. Residual monomers measured by HPLC were AA (94 ppm), BuA (<20 ppm) and DADMAC (1090 ppm). The solids content of the obtained polymer after solvent exchange was 20.4%.

### Chain end removal

All polymers were treated to remove the chain ends. The aqueous solution after solvent exchange was adjusted to pH 8-9 using NaOH (50%). The solution was then heated to 70°C and H₂O₂ added over 1 h. The quantity of H₂O₂ to add was calculated using the following expression: Mass H₂O₂ (30% solution) = {(Mass(Rhodixan A1)/208)*34*8}/0.3. Mass(Rhodixan A1 - *O*-ethyl-*S*-(1-methoxycarbonyl)ethyl-dithiocarbonate) is the total mass employed in the polymerization stage. Upon completion of the H₂O₂ addition, the reaction mixture was kept for further 4h at 70°C, whereupon it was cooled to room temperature and discharged.

### Example 2: Washing results

a) Washing conditions

| | |
|---|---|
| Washing machine: | Miele® W 1514 Novotronic |
| Wash program: | 70 minutes main wash cotton program |
| Wash temperature: | cold (20 °C) |
| Volume of wash liquor: | 17 l |
| Water hardness: | 16°DH |
| Dosage of detergent: | 100 ml |
| Amount of laundry: | 3.5 kg clean textiles (pillows, shirts, dish cloths, barley corn cloths) incl. test fabrics |

b) Procedure:
Standardized fatty/pigmented stains (A: Nutella®; B: Classic Italian Dressing (Kraft®); C: Kebab Grease; D: Ragu + Olive Oil; E: Olive Oil + Tomato Ketchup) were applied on polyester test fabrics and the stains were aged for 7 days. The stained textiles were then washed under the above-cited conditions with a laundry detergent that comprised (all percentages by weight) 7.5. % C₁₂-₁₈ fatty alcohol with 7 EO, 1 % citric acid, 3 % C₁₂₋₁₈ fatty acid, 0.1 % DPTMP-Na₇H₃, 0.6 % NaOH, 1 % of one of the copolymers P described in example 1, and water up to 100 %, pH 8.5. After washing the textiles were dried in air. The evaluation of detergency was by colorimetric analysis comparing the result of the polymer containing detergent with the result of a detergent described as above, but in which the copolymer P was replaced by water; the remission difference values given in the table below are the mean values of 3 repetitions of the described procedure.

| Stain / Copolymer | PI | P II | P III | P IV | P V | P VI | P VII |
|---|---|---|---|---|---|---|---|
| A | 6.3 | 6.7 | 4.4 | 7.9 | 7.6 | 8.7 | 7.2 |
| B | 17.2 | 18.8 | 16.3 | 19.3 | 19.0 | 20.7 | 18.9 |
| C | 4.0 | 5.3 | 3.8 | 5.6 | 5.2 | 7.1 | 5.7 |
| D | 5.4 | 5.6 | 5.4 | 7.3 | 7.0 | 9.3 | 6.1 |
| E | 5.4 | 4.2 | 3.5 | 5.9 | 6.5 | 8.0 | 5.3 |

The laundry detergents with a copolymer P to be used according to the invention showed a significantly better washing power than the otherwise identical composition without the copolymer P.

## Claims

1. A laundry detergent composition which comprises a statistical copolymer P obtainable by polymerization of 50 mol % to 99 mol % of hydrophilic monomer Mₕ, selected from the group consisting of acrylic acid and salts thereof, styrene sulfonate, N,N-diallyl-N,N-dimethylammonium chloride, beta-carboxyethyl acrylate, and mixtures thereof, 1 mol % to 50 mol % of lipophilic monomer Mᵢ, selected from the group consisting of acrylic acid alkyl esters, and up to 20 mol % of crosslinker C, said copolymer P having a mean molar mass of from 1000 g/mol to 100000 g/mol.

2. Composition according to claim 1, **characterized in that** the amount of hydrophilic monomer Mₕ is in the range of from 50 mol % to 80 mol %, preferably from 60 mol % to 75 mol %.

3. Composition according to claim 1 or claim 2, **characterized in that** the amount of lipophilic monomer Mₗ is in the range of from 20 mol % to 45 mol %, preferably from 25 mol % to 40 mol %.

4. Composition according to any of claims 1 to 3, **characterized in that** the amount of crosslinker C is in the range of from 0.01 mol % to 15 mol %, preferably from 0.02 mol % to 2 mol %.

5. Composition according to any of claims 1 to 3, **characterized in that** the amount of crosslinker C is up to 5 mol %

6. Composition according to any of claims 1 to 5, **characterized in that** the crosslinker C is ethylene glycol dimethacrylate.

7. Composition according to any of claims 1 to 6, **characterized in that** the copolymer P has a mean molar mass in the range of from 2000 g/mol to 80000 g/mol, preferably 5000 g/mol to 40000 g/mol.

8. Composition according to any of claims 1 to 7, **characterized in that** the copolymer P is obtained by controlled free-radical polymerization of a mixture of the hydrophilic monomers Mₕ and lipophilic monomers Mₗ, preferably by a process including a step of bringing into contact a mixture of the hydrophilic monomers Mₕ and lipophilic monomers Mₗ, preferably in a solvent, with at least one source of free radicals, and at least one control agent compound which is preferably a xanthate, dithioester, thioether-thione or dithiocarbamate, more preferably a xanthate.

9. Composition according to any of claims 1 to 8, **characterized in that** it comprises from 0.1 weight % to 10 weight %, preferably 0.2 weight % to 5 weight %, more preferably 0.5 weight % to 2 weight %, of the copolymer P.

10. Process of laundering textiles, comprising a step of contacting the textile with a composition comprising a statistical copolymer P obtainable by polymerization of 50 mol % to 99 mol % of hydrophilic monomer Mₕ, selected from the group consisting of acrylic acid and salts thereof, styrene sulfonate, N,N-diallyl-N,N-dimethylammonium chloride, beta-carboxyethyl acrylate, and mixtures thereof, 1 mol % to 50 mol % of lipophilic monomer Mₗ selected from the group consisting of acrylic acid alkyl esters, and up to 20 mol % of crosslinker C, said copolymer P having a mean molar mass of from 1000 g/mol to 100000 g/mol, preferably with a composition according to any of claims 1 to 9.
